# EUROPEAN PATENT SPECIFICATION

(11) **EP 0 487 477 B1**
(45) Date of publication and mention of the grant of the patent: **06.09.1995**
(21) Application number: 91850282.4
(22) Date of filing: 18.11.1991
(51) Int. Cl.: B05D 5/02, B65H 27/00, C09D 175/04

(54) **Method for coating of a roll, and a roll coating**
Verfahren zur Beschichtung einer Walze und Walzenbezug
Methode pour revêtir un rouleau et revêtement de rouleau

(30) Priority: 19.11.1990 FI 905711
(43) Date of publication of application: 27.05.1992
(73) Proprietor: VALMET PAPER MACHINERY INC., 00130 Helsinki (FI)
(72) Inventor: Lehtonen, Pentti, SF-40250 Jyväskylä (FI); Jaakkola, Jyrki, SF-41800 Korpilahti (FI)
(74) Representative: Wallin, Bo-Göran

(56) References cited:
- EP-A- 0 274 096
- DE-A- 3 802 735
- FR-A- 1 406 021
- FR-A- 2 178 644
- GB-A- 852 273
- US-A- 4 885 324

## Description

The invention concerns a method for coating of a roll, in particular of rolls in size presses and coating machines, in which method a resilient polymer coating is fitted onto the roll frame.

Further, the invention also concerns a roll coating, in particular a roll coating for rolls in size presses and coating machines.

Coated rolls are used in paper machines and paper finishing machines in highly varying applications. As examples of such applications should be mentioned press rolls and rolls in coating machines, in particular size-press rolls, suction rolls, soft rolls of calenders and supercalenders, and equivalent. In different applications and in different processes, different quality requirements are imposed on the roll coating. Usual quality factors of a coating are, among other things, hardness at a certain temperature, resistance to temperature, resistance to compression, chemical strength, smoothness of the face, resistance to mechanical damage, elasticity, surface energy, electrical conductivity, and resistance to ageing.

The soft coatings on rolls are usually made of organic polymers or mixtures of same, which frequently also contain inorganic elements. The soft coatings on rolls are frequently composite constructions, which comprise layers made of different materials.

In the present-day size presses that make use of the short-dwell technique, which have been designed for high speeds, a considerable problem is the wear of the back-up rolls. Most typically, such wear occurs as scratching, which is caused when particles that arrive in the area of application or that are formed in said area come into contact with the roll face in narrow gaps or when the application devices come into contact with the roll. The scratching particles are usually impurities present in the coating/surface-sizing materials used, but they may also be formed as a result of high shear forces when the rheology of the coating agent/surface size is unfavourable. A damage in a roll is usually not produced if the scratching particle stays in the same location for a very short period of time, for example less than one revolution of the roll. Most typically, the wear of a roll is manifested in the web as a local and long-term deviation of the quantity of coating/size after the size press and/or coating machine. Even one scratch in the roll may cause mechanical damage to the other finishing equipment, and, as a rule, at least it spoils the printing quality of the web locally.

Traditionally attempts are made to modify the coating properties of polymer-coated rolls by into the coating mixing various additives and fillers. By means of such mixing, attempts are mostly made to modify and/or to improve properties of the polymer such as cost, wear resistance, resistance to corrosion, thermal conductivity, stiffness, properties of detaching, friction, properties of hysteresis, etc. As one of the problems associated with the mixing it should be mentioned that, when a certain additive is mixed into a polymer material to modify some property, at the same time some other property important for the operation is deteriorated. For example, in prior art, a polymer material is known which operates very well in view of the operation of a press roll, which means that the nip width is good, there are no problems in respect of hysteresis heat, the running quality is good, the adhesion to the metal frame is good, and, moreover, it endures surface pressures and attenuates oscillations. However, it is a remarkable problem of said roll coating that the wear resistance is poor. In traditional methods, to improve the wear resistance, hard, finely divided particles which increase the wear resistance are mixed into the polymer. This mixing increases the wear resistance of the coating, but at the same time it deteriorates properties vital for the press roll, and, as a result, the nip width is reduced, the ability to attenuate oscillations is lowered, the adhesion to the metal frame becomes weaker, the running quality suffers, and in some cases also the resistance to corrosion is reduced. In the worst cases, the final result may be an unusable roll.

Generally speaking, in respect of the prior art regarding the technique of mixed coatings, the applicant's FI Patent 72,073 of earlier date should be mentioned, wherein a press roll is described whose surface layer is composed of a mixture of a metal powder and an inorganic powder. The function of the metal is to act as a binder agent and to increase the toughness of the roll coating, and the function of the inorganic material is to provide a wear-resistant surface of suitable surface energy, because the surface energy of the roll must be within certain limits in order that the detaching of the paper web from the face of the press roll should be controlled. The applicant's FI Pat. Appl. No. 853544 (DE-A-3 621 154) of earlier date also describes a solution of a type similar to that mentioned above. Further, as prior art, reference is also made to the applicant's FI Pat. Appl. No. 882006 (EP-A-0 341 229) of earlier date, wherein the coating is composed of a powder which consists of carbide-rich powder and of matrix powder.

In prior art, various multi-layer constructions of rolls and processes for their manufacture are also known. As an example should be mentioned the FI Patent No. 66,667, wherein, on the roll core, there is a number of rings made of steel in the axial direction, and onto the cylindrical core an inner layer and an outer layer have been fixed, which are surrounded from outside by said rings. A layer construction is also known from the FI Patent No. 55,457, wherein a roll is described which comprises three concentric roll mantles made as separate casts, a metallurgical bond being provided between said roll mantles. Also, from the FI Pat. Appl. No. 880592 a roll is known which is provided with a multi-layer coating. Further, in respect of prior art, reference is made to the FI Pat. Appl. No. 854748 of earlier date, in which a polymer coating and a method for its manufacture are described.

In respect of prior art, reference is further made to the applicant's FI Pat. Appl. No. 890953 (US-A-5 023 985, US-A-5 176 940) of earlier date, by whose means a considerable improvement has been provided over the prior art referred to above. In said FI application, a roll coating and a method for the manufacture of same are described, in which method a resilient polymer coating is fixed onto the outer face of the frame mantle of the roll, and a coating is further fixed onto the outer face of said polymer coating, which coating is considerably thinner than the polymer coating. By means of the solution in accordance with said FI application, attempts were made to provide a roll coating which, owing to the polymer coating, is resilient and attenuates oscillations and which is additionally highly resistant to wear because of the surface layer provided on the polymer coating. The objectives aimed at were also achieved quite well by means of the solution of said FI application.

DE-A-3 802 735 discloses a roll for a printing device coated with a resilient polymer coating according to the prior art portion of claim 1.

The present invention, however, specifically concerns a method for coating of rolls in size presses and coating machines as well as a roll coating for rolls in size presses and coating machines. The present-day size presses and coating machines that employ the short-well technique are commonly provided with rolls that have a roll coating that does not contain a filler agent. In such solutions, the other properties of the rolls are good, with the exception of the resistance to scratching. Poor resistance to scratching, i.e., more generally, poor wear resistance, is also one of the worst problems of the rolls of this type in size presses and coating machines. The most typical wear damage of the rolls is exactly scratching, which results from a particle that remains below the bar or blade that is used as the coating member, as was already explained above. Thus, the object of the present invention is to provide a method for coating of a roll as well as a roll coating provided in accordance with the method, which coating possesses all the good properties of the prior-art solutions and which is essentially better than the prior-art solutions in respect of the wear resistance.

In view of achieving this objective, the method in accordance with the invention is characterized by the features of the characterising portion of claim 1.

The most remarkable advantage of the invention over the present-day solutions lies exactly therein that the novel roll coating provided has a substantially better wear resistance than the prior-art solutions have. This has been established in numerous test runs. Besides the wear resistance, a further remarkable advantage of the solution in accordance with the invention is therein that, during operation, the roll coating in accordance with the invention does not wear the coating member, such as a bar or blade, to any higher extent than the prior-art coatings do, which latter coatings do not contain filler agents corresponding to those contained in the coating in accordance with the present invention. Moreover, by means of the coating material in accordance with the invention, a friction coefficient favourable from the point of view of the process-technical properties is obtained.

In the following, the invention will be described by way of example with reference to the figures in the accompanying drawings.

Figure 1 is a fully schematic partial sectional view of a size-press roll which is provided with a coating in accordance with the invention.

Figure 2 is a schematic side view of a size press on whose rolls a coating in accordance with the invention is used.

Figure 3 is a schematic illustration of a coating method for providing a roll with a coating in accordance with the invention.

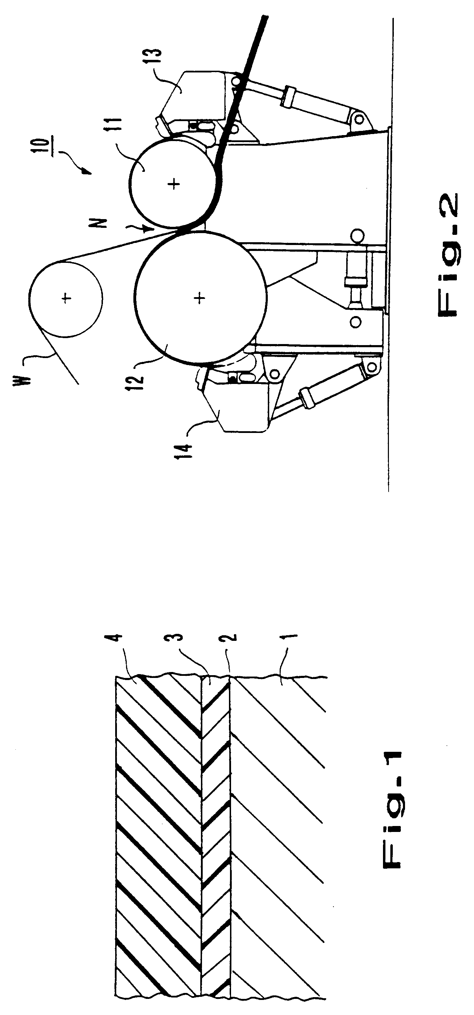

Fig. 2 is a schematic illustration of a size press, which is denoted generally with the reference numeral 10. The size press 10 comprises size-press rolls 11,12, which form a nip N with one another, through which nip the paper or board web W or equivalent is made to run. The size press 10 operates by means of the so-called short-dwell principle, wherein size films are spread onto the faces of the size-press rolls 11,12 by means of short-dwell coating devices 13,14 so that said size films are transferred in the roll nip N onto the web W. In the coating devices 13,14, e.g., a bar or blade can be used as the coating member.

Fig. 1 is a schematic partial sectional view of a roll and of a roll coating provided on its face. In Fig. 1, the roll or roll frame is denoted with the reference numeral 1, and its material may be any currently employed material whatsoever, such as steel, cast iron, or equivalent. The roll coating in accordance with the invention, placed on the roll frame, consists of a size layer 2 spread onto the roll frame 1, of an intermediate layer 3, and of a polymer matrix 4. Certain admixtures and fillers as well as materials essential for the manufacturing technique have been added to the polymer matrix 4. The function of the various admixtures and fillers present in the polymer matrix 4 is to improve the sizing-technical properties, resistance to scratching, and wear resistance of the coating surface as well as to take into account that it should be possible to measure the quantity of size from the roll face, e.g., in the way described in the applicant's FI Pat. Appl. No. 902930 (US-A-5 162 131) of earlier date. Further, the manufacturing-technical properties of the coating material and especially of the polymer matrix 4 have been improved by means of various chemicals, whose function is to provide a coating as fault-free and homogeneous as possible.

As the matrix material of the polymer matrix 4 in the coating, a polymer or a mixture of two or more polymers is used. The polymer may be a thermoplastic or thermosetting plastic, rubber, thermoplastic rubber, or elastomer. In order to modify and to improve the properties of the matrix, for example, oxides, carbides, sulphates, etc. are mixed into it. As examples of such admixtures should be mentioned barium sulphate, BaSO₄, silicon dioxide, SiO₂, titanium dioxide, TiO₂. The manufacturing-technical properties of the coating are varied by means of various activators, accelerating agents, reticulating agents, etc. The coating may be formed onto the roll frame 1, e.g., by mould casting, rotation casting, submerging, spraying, extrusion, centrifugal casting, lamination, electrocoating, fluidized coating, or filament winding.

In the following, an example will be given of the way in which such a coating is produced on the roll frame 1.

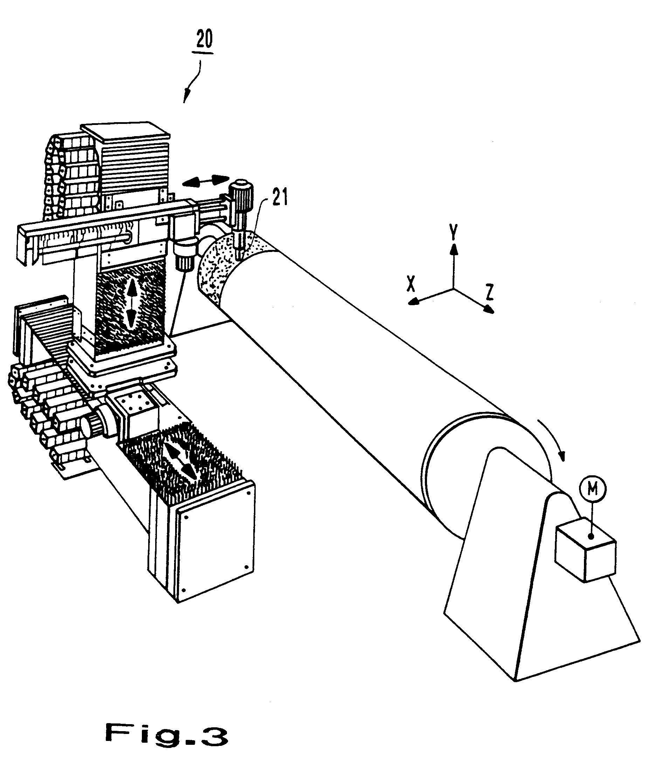

The coating is formed onto the roll frame 1 by means of rotation casting. The principle of rotation casting is illustrated schematically in Fig. 3. In rotation casting the roll 1 to be coated is rotated at a certain speed in a horizontal position. In Fig. 3, the casting equipment is denoted generally with the reference numeral 20. The casting equipment 20 includes a casting head 21, through which the polymer is passed onto the roll to be coated. The polymer casting head 21 is fed in the axial direction of the roll at a certain speed. The position of the nozzle in the casting head 21 is located precisely by means of the movements X, Y and Z. The liquid polymer flows through the nozzle in the casting head 21 onto the roll 1 face, and hereby the roll is coated.

In the example case, the matrix material that is used is polyurethane elastomer. The polyurethane material may be either a polyether or a polyester or a mixture of same. In the example case, prepolymerized polyetherpolyol is used as the matrix material. As manufacturing-technical additives, which have been mixed into the polyol component, activators and reticulating agents are used.

Admixtures that are used are phosphates, glass, and titanium dioxide, which have been premixed into the polyol component. For adjustment of the hardness of the material, a polyol is used whose OH-number differs from that of the matrix polyol. As isocyanate, MDI-isocyanate is used.

Between the coating proper and the roll frame, a so-called intermediate layer is applied, which operates as a water block layer, acts upon the shear tensions in the interface, and improves the adhesion. The intermediate layer can be made of the materials mentioned above and by the methods mentioned above.

Thus, in the example case, three polyethers of different OH-numbers have been used together with MDI-isocyanate. Of the admixtures, glass can be used in the matrix material in different forms as an amount of 0 to 30 %-wt.

The amount of phosphates in the matrix materials can be 0 to 3 %-wt.

Premixed titanium dioxide, TiO₂, is used in the matrix material as an amount of 0 to 40 %-wt.

The amounts of various manufacturing-technical additives depends on the dimensions of the roll 1 to be coated. If the admixtures and fillers in the polyol are chosen appropriately, the hardness of the coating can be regulated in the desired way. As a suitable range of variation of the hardness of the coating may be considered the hardness values 20 Shore-A to 90 Shore-A or 15 PJ to 2 PJ.

As reticulating agents for the matrix material, it is possible to use, e.g., butanediol-1,4, glycerol, triethanolamine, trimethylolpropane, or equivalent. As activators, for example, tertiary amines are used.

Above, the invention has been described by means of an exemplifying embodiment, but the invention is not confined to said exemplifying embodiment alone, but different embodiments may show variation within the scope of the inventive idea defined in the following patent claims.

## Claims

1. Method for coating rolls in size presses and coating machines, in which method a resilient polymer coating is applied to a roll frame, a polymer or a mixture of polymers being used as the matrix material for the coating material, said matrix material being thermoplastic or thermosetting plastic, rubber, thermoplastic rubber, or elastomer, **characterized** in that polyurethane elastomer, prepolymerized polyetherpolyol or prepolymerized polyesterpolyol is used as the matrix material, that into the polymer or mixture of polymers, before the coating material is applied to the roll frame, oxides and/or carbides and/or sulphates are admixed to improve the wear resistance and the process-technical properties, and various fillers and admixtures are admixed to improve the manufacturing-technical properties, the substantially homogeneous coating material thereby formed being spread onto the roll frame as a substantially even and homogeneous layer.

2. Method as claimed in claim 1, **characterized** in that the material is spread onto the roll frame in two stages so that first an intermediate layer is spread onto the roll frame, and then the mixed surface layer is applied onto said intermediate layer.

3. Method as claimed in claim 1 or 2, **characterized** in that into the polyurethane elastomer, another polyetherpolyol or polyesterpolyol is mixed, whose OH-number is different from the corresponding number of the polyurethane elastomer.

4. Method as claimed in any of the preceding claims, **characterized** in that glass, titanium dioxide and phosphates are premixed into the matrix material.

5. Method as claimed in claim 4, **characterized** in that glass is added to the matrix material so that its content is 0 to 30 %-wt, of the coating material.

6. Method as claimed in claim 4, **characterized** in that phosphates are added to the matrix material so that their content is 0 to 3 %-wt. of the coating material.

7. Method as claimed in claim 4, **characterized** in that titanium dioxide is premixed into the matrix material so that its content is 0 to 40 %-wt. of the coating material.

8. Method as claimed in any of the preceding claims, **characterized** in that butanediol, glycerol, triethanolamine, trimethylolpropane, or equivalent is used as a reticulating agent in the matrix material.

9. Method as claimed in any of the preceding claims, **characterized** in that tertiary amines are used as activators.

10. Method as claimed in any of the preceding claims, **characterized** in that the coating is spread onto the roll frame by rotation casting.

11. Roll coating prepared in accordance with any of the preceding claims, for rolls (11, 12) in size presses (10) and coating machines, which coating contains a matrix material of a polymer or a mixture of polymers, said matrix material being thermoplastic or thermosetting plastic, rubber, thermoplastic rubber, or elastomer, **characterized** in that said matrix material is polyurethane elastomer, prepolymerized polyetherpolyol or polyesterpolyol and that into said matrix material oxides and/or carbides and/or sulphates have been mixed to improve the wear resistance and the process-technical properties as well as activators and/or reticulating agents, so that the coating formed on the roll frame (1) is substantially homogeneous and even.

12. Roll coating as claimed in claim 11, **characterized** in that the roll coating consists of an intermediate layer (3) applied onto the roll frame (1) and of a surface layer (4) applied onto the intermediate layer.

13. Roll coating as claimed in claim 12, **characterized** in that, in respect of their properties and materials, the intermediate layer (3) and the surface layer (4) are substantially equal to one another.

14. Roll coating as claimed in claim 12, **characterized** in that, in respect of their properties and materials, the intermediate layer (3) and the surface layer (4) are substantially different from one another.

15. Roll coating as claimed in claim 11, **characterized** in that into the prepolymerized polyetherpolyol or polyesterpolyol, polyetherpolyol or polyesterpolyol or different OH-number has been mixed to regulate the hardness of the coating.

16. Roll coating as claimed in claim 15, **characterized** in that the hardness of the coating is 20 to 90 Shore-A or 15 to 2 PJ.

17. Roll coating as claimed in any of the claims 11 to 16, **characterized** in that the matrix material contains 0 to 30 %-wt. of glass.

18. Roll coating as claimed in any of the claims 11 to 16, **characterized** in that the matrix material contains 0 to 3 %-wt. of phosphates.

19. Roll coating as claimed in any of the claims 11 to 16, **characterized** in that the matrix material contains 0 to 40 %-wt. of titanium dioxide.

## Patentansprüche

1. Verfahren zum Beschichtung von Walzen in Leimpressen und Streichmaschinen, bei welchem Verfahren eine elastische Polymer-Beschichtung auf einen Walzenrahmen aufgetragen wird, wobei als das Grundmaterial für das Beschichtungsmaterial ein Polymer oder eine Mischung von Polymeren verwendet wird und das Grundmaterial thermoplastischer oder wärmehärtender Kunststoff, Kautschuk, thermoplastischer Kautschuk oder ein Elastomer ist, dadurch gekennzeichnet, daß als das Grundmaterial Polyurethanelastomer, vorpolymerisiertes Polyetherpolyol oder vorpolymerisiertes Polyesterpolyol verwendet wird, daß, bevor das Beschichtungsmaterial auf den Walzenrahmen aufgetragen wird, in das Polymer oder in die Mischung von Polymeren Oxide und/oder Karbide und/oder Sulfate beigemischt werden, um den Verschleißwiderstand und die prozeßtechnischen Eigenschaften zu verbessern, und verschiedene Füllstoffe und Zusätze beigemischt werden, um die herstellungstechnischen Eigenschaften zu verbessern, wobei das dabei gebildete im wesentlichen homogene Beschichtungsmaterial als eine im wesentlichen gleichmäßige und homogene Schicht auf den Walzenrahmen verteilt wird.

2. Verfahren nach Anspruch 1, dadurch gekennzeichnet, daß das Material in zwei Stufen auf den Walzenrahmen verteilt wird, so daß zuerst eine Zwischenschicht auf den Walzenrahmen verteilt wird und dann die gemischte Oberflächenschicht auf dar Zwischenschicht aufgetragen wird.

3. Verfahren nach Anspruch 1 oder 2, dadurch gekennzeichnet, daß in das Polyurethanelastomer ein anderes Polyetherpolyol oder Polyesterpolyol gemischt wird, deren OH-Anzahl sich von der entsprechenden Anzahl des Polyurethanelastomers unterscheidet.

4. Verfahren nach einem der vorhergehenden Ansprüche, dadurch gekennzeichnet, daß Glas, Titandioxid und Phosphate in das Grundmaterial vorgemischt werden.

5. Verfahren nach Anspruch 4, dadurch gekennzeichnet, daß dem Grundmaterial Glas beigegeben wird, so daß sein Anteil 0 bis 30 Gew.-% des Beschichtungsmaterials beträgt.

6. Verfahren nach Anspruch 4, dadurch gekennzeichnet, daß dem Grundmaterial Phosphate beigegeben werden, so daß ihr Anteil 0 bis 3 Gew.-% des Beschichtungsmaterials beträgt.

7. Verfahren nach Anspruch 4, dadurch gekennzeichnet, daß in das Grundmaterial Titandioxid vorgemischt wird, so daß sein Anteil 0 bis 40 Gew.-% des Beschichtungsmaterials beträgt.

8. Verfahren nach einen der vorhergehenden Ansprüche, dadurch gekennzeichnet, daß als ein Vernetzungsmittel in dem Grundmaterial Butandiol, Glycerol, Triethanolamin, Trimethylolpropan oder dergleichen verwendet wird.

9. Verfahren nach einem der vorhergehenden Ansprüche, dadurch gekennzeichnet, daß als Aktivierungsmittel Tertiäramine verwendet werden.

10. Verfahren nach einem der vorhergehenden Ansprüche, dadurch gekennzeichnet, daß die Beschichtung mit Hilfe von Drehgießen auf den Walzenrahmen verteilt wird.

11. Walzenbeschichtung, die nach einem der vorhergehenden Ansprüche hergestellt worden ist, und zwar für Walzen (11, 12) in Leimpressen (10) und Streichmaschinen, wobei die Beschichtung ein Grundmaterial aus einem Polymer oder einer Mischung von Polymeren enthält und das Grundmaterial ein thermoplastischer oder wärmehärtender Kunststoff, Kautschuk, thermoplastischer Kautschuk oder ein Elastomer ist, dadurch gekennzeichnet, daß das Grundmaterial Polyurethanelastomer, vorpolymerisiertes Polyetherpolyol oder Polyesterpolyol ist und daß in das Grundmaterial Oxide und/oder Karbide und/oder Sulfate gemischt worden sind, um den Verschleißwiderstand und die prozeßtechnischen Eigenschaften zu verbessern, sowie Aktivierungsmittel und/oder Vernetzungsmittel, so daß die auf dem Walzenrahmen (1) gebildete Beschichtung im wesentlichen homogen und gleichmäßig ist.

12. Walzenbeschichtung nach Anspruch 11, dadurch gekennzeichnet, daß die Walzenbeschichtung aus einer Zwischenschicht (3), die auf den Walzenrahmen (1) aufgetragen worden ist, und aus einer Oberflächenschicht (4) besteht, die auf der Zwischenschicht aufgetragen worden ist.

13. Walzenbeschichtung nach Anspruch 12, dadurch gekennzeichnet, daß hinsichtlich ihrer Eigenschaften und Materialien die Zwischenschicht (3) und die Oberflächenschicht (4) einander im wesentlichen gleichen.

14. Walzenbeschichtung nach Anspruch 12, dadurch gekennzeichnet, das hinsichtlich ihrer Eigenschaften und Materialien die Zwischenschicht (3) und die Oberflächenschicht (4) im wesentlichen unterschiedlich zueinander sind.

15. Walzenbeschichtung nach Anspruch 11, dadurch gekennzeichnet, daß in das vorpolymerisierte Polyetherpolyol oder Polyesterpolyol, Polyetherpolyol oder Polyesterpolyol einer unterschiedlichen OH-Anzahl gemischt worden ist, um die Härte der Beschichtung zu regulieren.

16. Walzenbeschichtung nach Anspruch 15, dadurch gekennzeichnet, daß die Härte der Beschichtung 20 bis 90 Shore-A oder 15 bis 2 PJ ist.

17. Walzenbeschichtung nach einem der Ansprüche 11 bis 16, dadurch gekennzeichnet, daß das Grundmaterial 0 bis 30 Gew.-% Glas enthält.

18. Walzenbeschichtung nach einem der Ansprüche 11 bis 16, dadurch gekennzeichnet, daß das Grundmaterial 0 bis 3 Gew.-% Phosphate enthält.

19. Walzenbeschichtung nach einem der Ansprüche 11 bis 16, dadurch gekennzeichnet, daß das Grundmaterial 0 bis 40 Gew.-% Titandioxid enthält.

## Revendications

1. Procédé pour revêtir des rouleaux dans des presses encolleuses et des coucheuses, procédé dans lequel un revêtement de polymère élastique est appliqué à un corps de rouleau, un polymère ou un mélange de polymères étant utilisé comme matériau de matrice pour le matériau de revêtement, ledit matériau de matrice étant une matière thermoplastique ou thermodurcissable, un caoutchouc, un caoutchouc thermoplastique ou un élastomère, caractérisé en ce qu'un élastomère de polyuréthane, un polyétherpolyol prépolymérisé ou un polyesterpolyol prépolymérisé est utilisé comme matériau de matrice, en ce que, avant que le matériau de revêtement soit appliqué au corps de rouleau, des oxydes et/ou carbures et/ou sulfates sont incorporés dans le polymère ou mélange de polymères pour améliorer la résistance à l'usure et les propriétés techniques de traitement, et différentes charges et différentes substances ajoutées sont incorporées pour améliorer les propriétés techniques de fabrication, le matériau de revêtement sensiblement homogène ainsi formé étant étalé sur le corps de rouleau sous forme d'une couche sensiblement uniforme et homogène.

2. Procédé selon la revendication 1, caractérisé en ce que le matériau est étalé sur le corps de rouleau en deux étapes de sorte que, tout d'abord, une couche intermédiaire est étalée sur le corps de rouleau, puis la couche superficielle mixte est appliquée sur ladite couche intermédiaire.

3. Procédé selon la revendication 1 ou 2, caractérisé en ce que dans l'élastomère de polyuréthane est incorporé un autre polyétherpolyol ou polyesterpolyol dont l'indice d'OH est différent de l'indice correspondant de l'élastomère de polyuréthane.

4. Procédé selon l'une quelconque des revendications précédentes, caractérisé en ce que du verre, du dioxyde de titane et des phosphates sont prémélangés avec le matériau de matrice.

5. Procédé selon la revendication 4, caractérisé en ce que du verre est ajouté au matériau de matrice de manière que sa teneur soit de 0 à 30% en masse du matériau de revêtement.

6. Procédé selon la revendication 4, caractérisé en ce que des phosphates sont ajoutés au matériau de matrice de manière que leur teneur soit de 0 à 3% en masse du matériau de revêtement.

7. Procédé selon la revendication 4, caractérisé en ce que du dioxyde de titane est prémélangé avec le matériau de matrice de manière que sa teneur soit de 0 à 40% en masse du matériau de revêtement.

8. Procédé selon l'une quelconque des revendications précédentes, caractérisé en ce que du butanediol, du glycérol, de la triéthanolamine, du triméthylolpropane ou équivalent est utilisé comme agent de réticulation dans le matériau de matrice.

9. Procédé selon l'une quelconque des revendications précédentes, caractérisé en ce que des amines tertiaires sont utilisées comme activateurs.

10. Procédé selon l'une quelconque des revendications précédentes, caractérisé en ce que le revêtement est étalé sur le corps de rouleau par coulée par rotation.

11. Revêtement de rouleau préparé selon l'une quelconque des revendications précédentes pour des rouleaux (11, 12) dans des presses encolleuses (10) et des coucheuses, lequel revêtement contient un matériau de matrice d'un polymère ou d'un mélange de polymères, ledit matériau de matrice étant une matière thermoplastique ou thermodurcissable, un caoutchouc, un caoutchouc thermoplastique ou un élastomère, caractérisé en ce que ledit matériau de matrice est un élastomère de polyuréthane, un polyétherpolyol prépolymérisé ou un polyesterpolyol prépolymérisé et en ce que des oxydes et/ou carbures et/ou sulfates ont été incorporés dans ledit matériau de matrice pour améliorer la résistance à l'usure et les propriétés techniques de traitement, ainsi que des activateurs et/ou des agents de réticulation de sorte que le revêtement formé sur le corps de rouleau (1) est sensiblement homogène et uniforme.

12. Revêtement de rouleau selon la revendication 11, caractérisé en ce que le revêtement de rouleau consiste en une couche intermédiaire (3) appliquée sur le corps de rouleau (1) et en une couche superficielle (4) appliquée sur la couche intermédiaire.

13. Revêtement de rouleau selon la revendication 12, caractérisé en ce que, concernant leurs propriétés et leurs matériaux, la couche intermédiaire (3) et la couche superficielle (4) sont sensiblement identiques l'une à l'autre.

14. Revêtement de rouleau selon la revendication 12, caractérisé en ce que, concernant leurs propriétés et leurs matériaux, la couche intermédiaire (3) et la couche superficielle (4) sont sensiblement différentes l'une de l'autre.

15. Revêtement de rouleau selon la revendication 11, caractérisé en ce que dans le polyétherpolyol prépolymérisé ou le polyesterpolyol prépolymérisé a été incorporé un polyétherpolyol ou un polyesterpolyol d'indice d'OH différent pour régler la dureté du revêtement.

16. Revêtement de rouleau selon la revendication 15, caractérisé en ce que la dureté du revêtement est de 20 à 90 Shore A ou de 15 à 2 PJ.

17. Revêtement de rouleau selon l'une quelconque des revendications 11 à 16, caractérisé en ce que le matériau de matrice contient 0 à 30% en masse de verre.

18. Revêtement de rouleau selon l'une quelconque des revendications 11 à 16, caractérisé en ce que le matériau de matrice contient 0 à 3% en masse de phosphates.

19. Revêtement de rouleau selon l'une quelconque des revendications 11 à 16, caractérisé en ce que le matériau de matrice contient 0 à 40% en masse de dioxyde de titane.
